# EUROPEAN PATENT SPECIFICATION

(11) **EP 3 700 246 B1**
(45) Date of publication and mention of the grant of the patent: **12.02.2025**
(21) Application number: 17929657.9
(22) Date of filing: 25.10.2017
(51) Int. Cl.: H04W 36/06, H04L 69/321, H04L 69/324

(54) **BANDWIDTH PART SWITCHING METHOD AND TERMINAL DEVICE**
BANDBREITENTEILSCHALTVERFAHREN UND ENDGERÄTEVORRICHTUNG
PROCÉDÉ DE COMMUTATION D'UNE PARTIE DE BANDE PASSANTE ET DISPOSITIF TERMINAL

(43) Date of publication of application: 26.08.2020
(73) Proprietor: GUANGDONG OPPO MOBILE TELECOMMUNICATIONS CORP., LTD., Dongguan, Guangdong 523860 (CN)
(72) Inventor: TANG, Hai, Dongguan Guangdong 523860 (CN)
(74) Representative: Penza, Giancarlo
(86) International application number: PCT/CN2017/107690
(87) International publication number: WO 2019/080014

(56) References cited:
- CN-A- 1 295 772
- CN-A- 1 841 989
- CN-A- 101 185 248
- CN-A- 101 360 343
- CATT: "Modeling Bandwidth Parts in MAC", vol. RAN WG2, no. Prague CZ; 20171009 - 20171013, 29 September 2017 (2017-09-29), XP051354824, Retrieved from the Internet <URL:http://www.3gpp.org/ftp/tsg_ran/WG2_RL2/TSGR2_99bis/Docs/> [retrieved on 20170929]
- ETSI MCC: "Report of 3GPP TSG RAN2#99bis meeting, Prague, Czech Republic", vol. RAN WG2, no. Reno, Nevada, USA; 20171227 - 20171201, 23 October 2017 (2017-10-23), XP051356203, Retrieved from the Internet <URL:http://www.3gpp.org/ftp/tsg_ran/WG2_RL2/TSGR2_99bis/Report/> [retrieved on 20171023]
- MEDIATEK INC: "Remaining Details on Bandwidth Part Operation in NR", 3GPP TSG RAN WG1 MEETING NR#3 R1-1716202, 21 September 2017 (2017-09-21), XP051329825
- SAMSUNG: "Activation/Deactivation of Bandwidth Parts in NR", 3GPP TSG-RAN WG2 NR #99BIS MEETING R2-1711189, 13 October 2017 (2017-10-13), XP051343196

## Description

### Technical Field

The present application relates to the field of communication, in particular to a method for switching a bandwidth part, a terminal device and a computer readable medium.

### Background

A system bandwidth supported by a new radio (NR) system is much larger than the maximum system bandwidth of 20MHz supported by a long term evolution (LTE) system. However, for some terminal devices, due to limited capacity, they may not be able to support all system bandwidths, and at the same time, in order to improve an efficiency of scheduling, the NR introduces a concept of bandwidth part (BWP).

Specifically, in a radio resource control (RRC) connected state, a network device may configure one or more BWPs for a terminal device, each BWP mainly includes three parameters: a basic parameter set (Numerology), a center frequency point, and a bandwidth, and the Numerology may be used for identifying a subcarrier spacing (SCS), and the bandwidth is less than or equal to the maximum system bandwidth.

It can be seen that the BWP is a concept of frequency domain dimension. At the same time, an existing discussion assumes that at a time point, a terminal device supports only one activated BWP. The so-called activated means that the terminal device expects to receive signals on a bandwidth specified by the BWP, and the signals includes (uplink and downlink) data transmission, system messages, and etc.

At the same time, the existing discussion also allows a network device to configure, by sending an instruction, the terminal device to perform switching between different BWPs, that is, to deactivate a current BWP and activate a new BWP.

However, current operation behaviors of switching a BWP, such as activation and deactivation, are all physical layer behaviors. Whether is the current operation behaviors are visible to a Media Access Control (MAC) layer is a subject that needs further research.

Related technologies are known from 3GPP DRAFT R2-1710274 and DRAFT_RAN2#99BIS_MEETING_REPORT)_V1.

### Summary

The invention is set out in the appended set of claims. The present application provides a method for switching a BWP and a terminal device, which enable a MAC layer to switch a BWP. It should be noted that embodiments of the invention are those whose scope is within that of the appended claims, and the implementations disclosed in this disclosure which do not fall under the scope of the appended claims are to be considered as examples for illustration.

In a first aspect, a method for switching a BWP is provided, the method including: switching a parameter of a MAC layer from a first parameter to a second parameter when a first BWP is switched to a second BWP at a physical layer, the first parameter corresponding to the first BWP and the second parameter corresponding to the second BWP; and performing an operation corresponding to the MAC layer according to the second parameter.

Therefore, according to the method for switching a BWP of an embodiment of the present application, when a BWP of the physical layer is switched, switching the parameter corresponding to the MAC layer by sending a switching identifier to the MAC layer, so that a relevant operation of the MAC layer may be performed by using the parameter corresponding to the switched BWP, thereby improving transmission efficiency.

The second parameter includes at least one of a physical uplink control channel (PUCCH) resource parameter, a physical downlink control channel (PDCCH) monitoring resource parameter, and a semi-persistent scheduling (SPS) resource parameter corresponding to the second BWP.

Specifically, the PUCCH resource parameter may be used for indicating a PUCCH resource, the PUCCH resource may be one periodic PUCCH resource, and the PUCCH resource may be used for transmitting a scheduling request (SR) or hybrid automatic repeat request (HARQ) feedback information.

The PDCCH monitoring resource parameter may be used for indicating a PDCCH monitoring resource, and the PDCCH monitoring resource parameter may be used for indicating a starting position of one PDCCH search space.

The SPS resource parameter may be used for indicating a SPS resource, the SPS resource may include configured downlink assignment and configured uplink grant. In addition, the SPS resource parameter may be a SPS resource parameter configured by an RRC and controlled by a L1 signaling. That is, similar to LTE SPS, the RRC configures a resource cycle, and DCI of L1 controls activation and use of a resource, and a frequency domain position of the resource. The SPS resource parameter may be a semi-persistent configuration resource parameter configured only by the RRC, i.e., indicating a semi-persistent resource configured by pure RRC, without control of L1 DCI, the RRC configures parameters including a resource cycle, a frequency domain resource position, and etc.

Further, the switching the parameter of the MAC layer from the first parameter to the second parameter includes: receiving a switching identifier from the physical layer at the MAC layer after the first BWP is switched to the second BWP at the physical layer; and switching the parameter of the MAC layer from the first parameter to the second parameter according to the switching identifier.

Further, the switching identifier is an identifier of the second BWP.

In combination with the first aspect and the implementations thereof, in another implementation of the first aspect, the first BWP is switched to the second BWP at the physical layer, including: receiving switching indication information sent by a network device; and switching the first BWP to the second BWP at the physical layer according to the switching indication information.

In combination with the first aspect and the implementations thereof, in another implementation of the first aspect, the receiving the switching indication information sent by the network device includes: receiving an RRC dedicated signaling, downlink control information (DCI), or a MAC control element (CE) sent by the network device, and the RRC dedicated signaling, the DCI, or the MAC CE includes the switching indication information.

Further, the first BWP is switched to the second BWP at the physical layer, including: switching the first BWP to the second BWP at the physical layer according to a preset cycle.

Optionally, the preset cycle may be configured by the network device for the terminal device.

Therefore, according to the method for switching a BWP of the embodiment of the present application, when a BWP of the physical layer is switched, switching the parameter corresponding to the MAC layer by sending the switching identifier to the MAC layer, so that the relevant operation of the MAC layer may be performed by using the parameter corresponding to the switched BWP, thereby improving the transmission efficiency.

In a second aspect, a terminal device is provided, and configured to perform the method of the first aspect or the method in any possible implementation of the first aspect. Specifically, the terminal device includes units for performing the method in the first aspect or the method in any possible implementation of the first aspect.

In a third aspect, a terminal device is provided, including a memory and a processor, the memory is configured to store instructions, the processor is configured to execute the instructions stored in the memory, and when the processor executes the instructions stored in the memory, the execution causes the processor to execute the method of the first aspect or the method in any possible implementation of the first aspect.

In a fourth aspect, a computer readable medium is provided, and configured to store a computer program, the computer program includes instructions for executing the method of the first aspect or the method in any possible implementation of the first aspect.

In a fifth aspect, a computer program product including instructions is provided, when a computer runs the instructions of the computer program product, the computer performs the method for switching a BWP of the first aspect or the method in any of the possible implementations of the first aspect. Specifically, the computer program product may be run on the terminal device of the second aspect. This aspect is not part of the claimed invention.

### Brief Description of Drawings

FIG. 1 is a schematic flow chart of a method for switching a BWP according to an embodiment of the present application.
FIG. 2 is a schematic block diagram of a terminal device according to an embodiment of the present application.
FIG. 3 is another schematic block diagram of a terminal device according to an embodiment of the present application.

### Detailed Description

Hereinafter, technical solutions in embodiments of the present application will be described with reference to the accompanying drawings.

The technical solutions of the embodiments of the present application may be applied to various communication systems, such as, a Global System of Mobile communication (GSM) system, Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, a future 5th Generation (5G) system, or New Radio (NR) ,etc.

A terminal device in the embodiments of the present application may be referred to a user equipment (UE), an access terminal, a subscriber unit, a subscriber station, a mobile station, a mobile platform, a remote station, a remote terminal, a mobile equipment, a user terminal, a terminal, a wireless communication device, a user agent, or a user apparatus. The terminal device may be a cellular phone, a cordless phone, a Session Initiation Protocol (SIP) phone, a Wireless Local Loop (WLL) station, a Personal Digital Assistant (PDA), a pedestrian device with a wireless communication function, a computing device or another processing device connected to a wireless modem, an on-board device, a wearable device, a terminal device in a future 5G network, or a terminal device in a future evolved Public Land Mobile Network (PLMN), etc., and the embodiments of the present application are not limited thereto.

A network device in the embodiments of the present application may be a device communicating with a terminal device, the network device may be a Base Transceiver Station (BTS) in a GSMC system or a CDMA system, a NodeB (NB) in a WCDMA system, or may be an evolutional NodeB in a LTE system (eNB or eNodeB), or may be a wireless controller in a scenario of a Cloud Radio Access Network (CRAN), or the network device may be a relay station, an access point, an on-board device, or a wearable device, a network device in the future 5G network, or a network device in the future evolved Public Land Mobile Network (PLMN), etc., and the embodiments of the present application are not limited thereto.

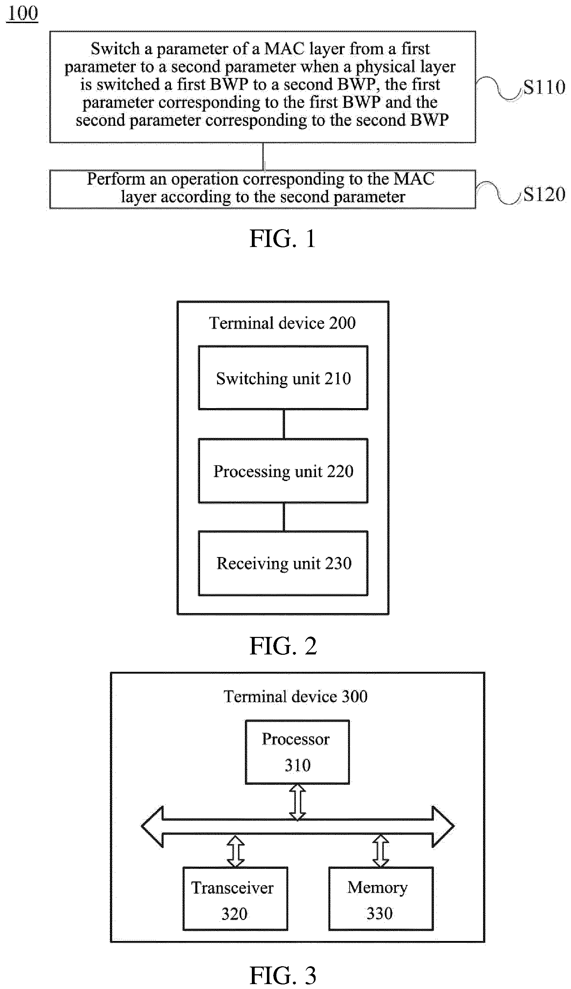

FIG. 1 shows a schematic flow chart of a method 100 for switching a BWP according to an embodiment of the present application, and the method 100 may be performed by a terminal device. As shown in FIG. 1, the method 100 includes: S110, when a first BWP is switched to a second BWP at a physical layer, switching a parameter of a MAC layer from a first parameter to a second parameter, the first parameter corresponding to the first BWP and the second parameter corresponding to the second BWP; S120, performing an operation corresponding to the MAC layer according to the second parameter.

In the embodiment of the present application, in an RRC connected state, a network device may configure one or more BWPs for the terminal device, and the network device is also allowed to configure, by sending an instruction, the terminal device to perform switching between different BWPs, i.e., deactivate a current BWP and activate a new BWP. Activating any one BWP means that the terminal device expects to receive signals on a bandwidth specified by the BWP, and the signals includes (uplink and downlink) data transmission, system messages and etc.

In the embodiment of the present application, the terminal device may determine to switch a BWP according to switching indication information sent by the network device or according to a preset cycle. Specifically, the terminal device may receive the switching indication information sent by the network device, which is configured to instruct the terminal device to switch from the current BWP to the new BWP. For example, the terminal device is in the first BWP currently, and the terminal device may be instructed to switch from the first BWP to the second BWP according to the switching indication information. The switching indication information may include an identifier of the second BWP so that the terminal device may switch from the first BWP to the second BWP according to the identifier of the second BWP in the switching indication information.

Optionally, the terminal device receives the switching indication information sent by the network device, and may carry the switching indication information through an RRC dedicated signaling, or include the switching indication information through DCI or a MAC CE. The embodiment of the present application is not limited thereto.

Optionally, the terminal device may switch a BWP according to the preset cycle. Specifically, a timer may be maintained in the terminal device, and whether switching a BWP is performed or not may be determined based on the timer. For example, the timer is set equal to a value of a preset cycle which may be configured by the network device or configured by the terminal device according to an actual application, and whether to switch a BWP is determined according to the value of the preset cycle.

It should be understood that the terminal device determines to perform a BWP, and may switch the current first BWP to the second BWP at the physical layer, specifically, deactivate the first BWP and activate the second BWP.

After the terminal device switches the first BWP to the second BWP at the physical layer, the terminal device may switch a parameter of the MAC layer from the first parameter to the second parameter, wherein the first parameter corresponds to the first BWP and the second parameter corresponds to the second BWP. Specifically, the terminal device performs a BWP switching at the physical layer, may send a switching identifier from the physical layer to the MAC layer, and indicates through the switching identifier that the BWP switching has been performed at the physical layer. The switching identifier may be an identifier of the second BWP, so as to determine a parameter corresponding to a new BWP of the MAC layer, that is, it is determined according to the identifier of the second BWP that the first BWP has been switched to the second BWP at the physical layer, then the MAC layer is determined to correspond to the second parameter of the second BWP.

In the embodiment of the present application, the first parameter of the MAC layer is switched to the second parameter, and the parameter of the MAC layer that needs to be switched may include at least one of: a PUCCH resource parameter, a PDCCH monitoring resource parameter, and a SPS resource parameter. Specifically, the PUCCH resource parameter may be used for indicating a PUCCH resource, which may be one periodic PUCCH resource, which may be used for SR or HARQ feedback information. The PDCCH monitoring resource parameter may be used for indicating a PDCCH monitoring resource, and the PDCCH monitoring resource parameter may be used for indicating a starting position of a PDCCH search space. The SPS resource parameter may be used for indicating a SPS resource, which may include configured downlink assignment and configured uplink grant. In addition, the SPS resource parameter may be a SPS resource parameter configured by an RRC and controlled by a L1 signaling. That is, similar to LTE SPS, the RRC configures a resource cycle, and DCI of L1 controls activation and use of a resource, and a frequency domain position of the resource. The SPS resource parameter may be a semi-persistent configuration resource parameter configured only by the RRC, i.e., indicating a semi-persistent resource configured by pure RRC, without control of L1 DCI, the RRC configures parameters including a resource cycle, a frequency domain resource position, and etc.

Specifically, the first parameter of the MAC layer is switched to the second parameter. For example, the first parameter of the MAC layer may include a PUCCH resource parameter, a PDCCH monitoring resource parameter, and a SPS resource parameter corresponding to the first BWP, and correspondingly, the switched second parameter may include a PUCCH resource parameter, a PDCCH monitoring resource parameter, and a SPS resource parameter corresponding to the second BWP.

In the embodiment of the present application, the terminal device switches the first BWP of the physical layer to the second BWP, and also switches the first parameter, of the MAC layer, corresponding to the first BWP to the second parameter corresponding to the second BWP, so the terminal device may use the second BWP or perform a relevant operation of the MAC layer according to the second parameter.

Therefore, according to the method for switching a BWP of the embodiment of the present application, when a BWP of the physical layer is switched, the parameter corresponding to the MAC layer are also switched by sending the switching identifier to the MAC layer, so that the relevant operation of the MAC layer may be performed by using a parameter corresponding to the switched BWP, thereby improving the transmission efficiency.

It should be understood that in various embodiments of the present application, sequence numbers of the various processes do not imply an order of execution of the various processes, which should be determined by their functions and internal logics, and should not constitute any limitation on implementation processes of the embodiments of the present application.

The term "and/or" in the document is merely used to describe an association relationship between associated objects, indicating that there may be three relationships, for example, A and/or B may indicate three situations: A alone, A and B, and B alone. In addition, the symbol "/" in the document generally indicates that objects before and after the symbol "/" have an "or" relationship.

The method for switching a BWP according to the embodiment of the present application is described in detail above with reference to FIG. 1. A terminal device according to an embodiment of the present application will be described below with reference to FIGs. 2 to 3.

As shown in FIG. 2, the terminal device 200 according to the embodiment of the present application includes a switching unit 210, a processing unit 220, and optionally, a receiving unit 230.

Specifically, the switching unit 210 is configured to switch a parameter of a MAC layer from a first parameter to a second parameter when a first BWP is switched to a second BWP at a physical layer, the first parameter corresponding to the first BWP and the second parameter corresponding to the second BWP; the processing unit 220 is configured to perform an operation corresponding to the MAC layer according to the second parameter.

Therefore, when a BWP of the physical layer is switched, the terminal device according to the embodiment of the present application also switches the parameter corresponding to the MAC layer by sending a switching identifier to the MAC layer, so that a relevant operation of the MAC layer may be performed by using a parameter corresponding to a switched BWP, thereby improving the transmission efficiency.

According to the current invention, the second parameter includes a PDCCH monitoring resource parameter.

Optionally, the second parameter includes at least one of a PUCCH resource parameter, and a SPS resource parameter corresponding to the second BWP.

According to the current invention, the switching unit 210 is specifically configured to receive a switching identifier from the physical layer at the MAC layer after the first BWP is switched to the second BWP at the physical layer; and switch the parameter of the MAC layer from the first parameter to the second parameter according to the switching identifier.

Optionally, the switching identifier is an identifier of the second BWP.

Optionally, the receiving unit 230 is configured to receive switching indication information sent by the network device; and the switching unit 210 is further configured to switch the first BWP to the second BWP at the physical layer according to the switching indication information.

Optionally, the receiving unit 230 is specifically configured to receive an RRC dedicated signaling, DCI, or a MAC CE sent by the network device, and the RRC dedicated signaling, the DCI, or the MAC CE includes the switching indication information.

According to the current invention, the switching unit 210 is further configured to switch the first BWP to the second BWP at the physical layer according to a preset cycle.

It should be understood that the terminal device 200 according to the embodiment of the present application may correspondingly perform the method 100 in the embodiment of the present application, and the above and other operations and/or functions of various units in the terminal device 200 are respectively for implementing corresponding flows of the terminal device of the method in FIG. 1, and will not be repeated here for the sake of brevity.

Therefore, when a BWP of the physical layer is switched, the terminal device according to the embodiment of the present application also switches the parameter corresponding to the MAC layer by sending the switching identifier to the MAC layer, so that the relevant operation of the MAC layer may be performed by using a parameter corresponding to a switched BWP, thereby improving the transmission efficiency.

FIG. 3 shows a schematic block diagram of a terminal device 300 according to an embodiment of the present application. As shown in FIG. 3, the terminal device 300 includes a processor 310 and a transceiver 320, the processor 310 and the transceiver 320 are connected, and optionally, the terminal device 300 further includes a memory 330 connected to the processor 310. The processor 310, the memory 330, and the transceiver 320 communicate with each other through internal connection paths to transmit and/or control data signals. The memory 330 may be configured to store instructions. The processor 310 is configured to execute the instructions stored in the memory 330 to control the transceiver 320 to send information or signals. The processor 310 is configured to switch a parameter of a MAC layer from a first parameter to a second parameter when a first BWP is switched to a second BWP at a physical layer, the first parameter corresponding to the first BWP and the second parameter corresponding to the second BWP; and perform an operation corresponding to the MAC layer according to the second parameter.

Therefore, when a BWP of the physical layer is switched, the terminal device according to the embodiment of the present application also switches the parameter corresponding to the MAC layer by sending a switching identifier to the MAC layer, so that a relevant operation of the MAC layer may be performed by using a parameter corresponding to a switched BWP, thereby improving the transmission efficiency.

Optionally, the second parameter includes at least one of a PUCCH resource parameter, a PDCCH monitoring resource parameter, and an SPS resource parameter corresponding to the second BWP.

Optionally, the processor 310 is configured to receive a switching identifier from the physical layer at the MAC layer after the first BWP is switched to the second BWP at the physical layer; and according to the switching identifier, switch the parameter of the MAC layer from the first parameter to the second parameter.

Optionally, the switching identifier is an identifier of the second BWP.

Optionally, the transceiver 320 is configured to receive switching indication information sent by a network device; the processor 310 is configured to switch the first BWP to the second BWP at the physical layer according to the switching indication information.

Optionally, the transceiver 320 is configured to receive an RRC dedicated signaling, DCI, or a MAC CE sent by the network device, and the RRC dedicated signaling, the DCI, or the MAC CE includes the switching indication information.

Optionally, the processor 310 is configured to switch the first BWP to the second BWP at the physical layer according to a preset cycle.

It should be understood that the terminal device 300 according to the embodiment of the present application may correspond to the terminal device 200 in the embodiment of the present application and may correspond to a corresponding body that performs the method 100 according to the embodiment of the present application, and the above and other operations and/or functions of various units in the terminal device 300 are respectively for implementing corresponding flows of the terminal device in the method shown in FIG. 1, and will not be repeated here for the sake of conciseness.

Therefore, when a BWP of the physical layer is switched, the terminal device according to the embodiment of the present application also switches the parameter corresponding to the MAC layer by sending the switching identifier to the MAC layer, so that the relevant operation of the MAC layer may be performed by using the parameter corresponding to the switched BWP, thereby improving the transmission efficiency.

It should be noted that the method embodiments of the present application may be applied to or implemented by a processor. The processor may be an integrated circuit chip with a signal processing capability. In an implementation process, the acts of the method embodiments may be completed by integrated logic circuits of hardware in the processor or instructions in a form of software. The processor may be a general purpose processor, a digital signal processor (DSP), an application specific integrated circuit (ASIC), a field programmable gate array (FPGA), or another programmable logic device, a discrete gate, or a transistor logic device, or a discrete hardware component. The processor may implement various methods, acts, and logic block diagrams disclosed in the embodiments of the present application. The general purpose processor may be a microprocessor or the processor may be any conventional processor or the like. The acts of the method disclosed in connection with the embodiments of the present application may be directly embodied by execution of a hardware decoding processor, or by execution of a combination of hardware and software modules in a decoding processor. The software modules may be located in a storage medium commonly used in the art, such as a random access memory, a flash memory, a read-only memory, a programmable read-only memory, or an electrically erasable programmable memory, or a register. The storage medium is located in the memory, and the processor reads information in the memory and completes the acts of the methods in combination with its hardware.

It should be understood that the memory in the embodiments of the present application may be a transitory memory or non-transitory memory, or may include both transitory and non-transitory memory. The non-transitory memory may be a read-only memory (ROM), a programmable rom (PROM), an erasable PROM (EPROM), an electrically erasable EPROM (EEPROM), or a flash memory. The transitory memory may be a random access memory (RAM) which serves as an external cache. By illustration of an example but not restriction, the RAM is available in many forms such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memories of the systems and methods described herein are intended to include, but are not limited to, these and any other suitable types of memories.

Those of ordinary skill in the art will recognize that various example units and algorithm acts described in connection with the embodiments disclosed herein can be implemented in electronic hardware, or a combination of computer software and electronic hardware. Whether these functions are implemented in hardware or software depends on a specific application and design constraint of the technical solutions. Skilled in the art may use different methods to realize the described functions for each specific application, but such realization should not be considered to be beyond the scope of the present application.

Those skilled in the art may clearly understand that for convenience and conciseness of description, the specific working processes of the systems, apparatuses and units may refer to the corresponding processes in the method embodiments, and details are not described herein again.

In several embodiments provided by the present application, it should be understood that the disclosed systems, apparatuses and methods may be implemented in other ways. The apparatus embodiments are only illustrative, for example, the division of the units is only a logical function division, and there may be other division manners in actual realization. For example, multiple units or components may be combined or integrated into another system, or some features may be ignored or not executed. On the other hand, the mutual coupling or direct coupling or communication connection shown or discussed may be indirect coupling or communication connection through some interfaces, apparatuses or units, and may be in electrical, mechanical or other forms.

The units described as separated components may or may not be physically separated, and the component shown as a unit may or may not be a physical unit, i.e., it may be located in one place or may be allocated over multiple network units. Some or all of the units may be selected according to practical needs to achieve a purpose of the embodiments.

In addition, various functional units in various embodiments of the present application may be integrated in one processing unit, or various units may be physically present separately, or two or more units may be integrated in one unit.

The function may be stored in a computer readable storage medium if implemented in a form of software functional unit and sold or used as a separate product. Based on this understanding, the technical solutions of the embodiments of the present application, in essence, or the part contributing to the related art, or the part of the technical solutions, may be embodied in the form of a software product stored in a storage medium, including several instructions for causing a computer device (which may be a personal computer, a server, or a network device, etc.) to perform all or part of the acts of the methods described in various embodiments of the present application. The storage medium includes a medium capable of storing program codes, such as a U disk, a mobile hard disk, a read-only memory (ROM), a random access memory (RAM), a magnetic disk, or an optical disk.

The foregoing are merely example embodiments of the present application, but the protection scope of the present application is not limited thereto. Any person skilled in the art may easily conceive variations or substitutions within the technical scope disclosed by the present application, which should be included within the protection scope of the present application. Therefore, the protection scope of the present application shall be determined by the protection scope of the claims.

## Claims

1. A method for switching a bandwidth part, comprising:
switching a parameter of a Medium Access Control, MAC, layer from a first parameter to a second parameter when a first bandwidth part is switched to a second bandwidth part at a physical layer, wherein the first parameter corresponds to the first bandwidth part and the second parameter corresponds to the second bandwidth part (S110); and
performing an operation corresponding to the MAC layer according to the second parameter (S120); wherein, the second parameter comprises a physical downlink control channel, PDCCH, monitoring resource parameter; wherein, the switching the parameter of the MAC layer from the first parameter to the second parameter comprises:
receiving, at the MAC layer, an identifier of the second bandwidth part from the physical layer after the first bandwidth part is switched to the second bandwidth part at the physical layer; and
switching the parameter of the MAC layer from the first parameter to the second parameter according to the identifier of the second bandwidth part; wherein the first bandwidth part is switched to the second bandwidth part at the physical layer, comprising:
switching the first bandwidth part to the second bandwidth part at the physical layer according to a preset cycle.

2. The method according to claim 1, wherein the first bandwidth part is switched to the second bandwidth part at the physical layer, comprising:
receiving switching indication information sent by a network device; and
switching the first bandwidth part to the second bandwidth part at the physical layer according to the switching indication information.

3. The method according to claim 2, wherein the receiving the switching indication information sent by the network device comprises:
receiving a radio resource control, RRC, dedicated signaling, downlink control information, DCI, or a MAC control element, CE, sent by the network device, wherein the RRC dedicated signaling, the DCI, or the MAC CE comprised the switching indication information.

4. A terminal device (200), comprising:
a switching unit (210), configured to switch a parameter of a Medium Access Control, MAC, layer from a first parameter to a second parameter when a first bandwidth part is switched to a second bandwidth part at a physical layer, wherein the first parameter corresponds to the first bandwidth part and the second parameter corresponds to the second bandwidth part; and
a processing unit (220), configured to perform an operation corresponding to the MAC layer according to the second parameter; wherein, the second parameter comprises a physical downlink control channel, PDCCH, monitoring resource parameter; wherein the switching unit (210) is specifically configured to:
receive, at the MAC layer, an identifier of the second bandwidth part from the physical layer after the first bandwidth part is switched to the second bandwidth part at the physical layer; and
switch the parameter of the MAC layer from the first parameter to the second parameter according to the an identifier of the second bandwidth part; wherein the switching unit (210) is further configured to:
switch the first bandwidth part to the second bandwidth part at the physical layer according to a preset cycle.

5. The terminal device according to claim 4, wherein the terminal device (200) further comprises:
a receiving unit (230), configured to receive switching indication information sent by a network device;
the switching unit (210) is further configured to:
switch the first bandwidth part to the second bandwidth part at the physical layer according to the switching indication information.

6. The terminal device according to claim 5, wherein the receiving unit (230) is specifically configured to:
receive a radio resource control, RRC, dedicated signaling, downlink control information, DCI, or a MAC control element, CE, sent by the network device, wherein the RRC dedicated signaling, the DCI, or the MAC CE comprises the switching indication information.

7. A computer readable medium configured to store a computer program, wherein the computer program comprises instructions for executing the method according to any one of claims 1-3.

## Patentansprüche

1. Verfahren zum Umschalten eines Bandbreitenteils, umfassend:
Umschalten eines Parameters einer Mediumzugangskontroll- bzw. MAC-Schicht von einem ersten Parameter auf einen zweiten Parameter, wenn ein erster Bandbreitenteil in einer Bitübertragungsschicht auf einen zweiten Bandbreitenteil umgeschaltet wird, wobei der erste Parameter dem ersten Bandbreitenteil entspricht und der zweite Parameter dem zweiten Bandbreitenteil entspricht (S110); und
Ausführen einer der MAC-Schicht entsprechenden Operation gemäß dem zweiten Parameter (S120); wobei der zweite Parameter einen "Physical Downlink Control Channel"- bzw. PDCCH-Überwachungsressourcenparameter umfasst; wobei das Umschalten des Parameters der MAC-Schicht von dem ersten Parameter auf den zweiten Parameter Folgendes umfasst:
Empfangen einer Kennung des zweiten Bandbreitenteils von der Bitübertragungsschicht in der MAC-Schicht, nachdem der erste Bandbreitenteil in der Bitübertragungsschicht auf den zweiten Bandbreitenteil umgeschaltet wird; und
Umschalten des Parameters der MAC-Schicht von dem ersten Parameter auf den zweiten Parameter gemäß der Kennung des zweiten Bandbreitenteils; wobei der erste Bandbreitenteil in der Bitübertragungsschicht auf den zweiten Bandbreitenteil umgeschaltet wird, umfassend:
Umschalten des ersten Bandbreitenteils auf den zweiten Bandbreitenteil in der Bitübertragungsschicht gemäß einem voreingestellten Zyklus.

2. Verfahren nach Anspruch 1, wobei der erste Bandbreitenteil in der Bitübertragungsschicht auf den zweiten Bandbreitenteil umgeschaltet wird, umfassend:
Empfangen von durch eine Netzvorrichtung gesendeten Umschaltangabeinformationen; und
Umschalten des ersten Bandbreitenteils auf den zweiten Bandbreitenteil in der Bitübertragungsschicht gemäß den Umschaltangabeinformationen.

3. Verfahren nach Anspruch 2, wobei das Empfangen durch die Netzvorrichtung gesendeten Umschaltangabeinformationen Folgendes umfasst:
Empfangen einer dedizierten Funkressourcensteuerungs- bzw. RRC-Signalisierung, Abwärtsstrecken-Steuerinformation DCI oder eines MAC-Steuerelements CE, das durch die Netzvorrichtung gesendet wird, wobei die dedizierte RRC-Signalisierung, die DCI oder das MAC-CE die Umschaltangabeinformationen ausmachen.

4. Endgerät (200), umfassend:
eine Umschalteinheit (210), ausgelegt zum Umschalten eines Parameters einer Mediumzugangskontroll- bzw. MAC-Schicht von einem ersten Parameter auf einen zweiten Parameter, wenn ein erster Bandbreitenteil in einer Bitübertragungsschicht auf einen zweiten Bandbreitenteil umgeschaltet wird, wobei der erste Parameter dem ersten Bandbreitenteil entspricht und der zweite Parameter dem zweiten Bandbreitenteil entspricht; und
eine Verarbeitungseinheit (220), ausgelegt zum Ausführen einer der MAC-Schicht entsprechenden Operation gemäß dem zweiten Parameter; wobei der zweite Parameter einen "Physical Downlink Control Channel"- bzw. PDCCH-Überwachungsressourcenparameter umfasst; wobei die Umschalteinheit (210) speziell ausgelegt ist zum
Empfangen einer Kennung des zweiten Bandbreitenteils von der Bitübertragungsschicht in der MAC-Schicht, nachdem der erste Bandbreitenteil in der Bitübertragungsschicht auf den zweiten Bandbreitenteil umgeschaltet wird; und
Umschalten des Parameters der MAC-Schicht von dem ersten Parameter auf den zweiten Parameter gemäß der Kennung des zweiten Bandbreitenteils; wobei die Umschalteinheit (210) ferner ausgelegt ist zum
Umschalten des ersten Bandbreitenteils auf den zweiten Bandbreitenteil in der Bitübertragungsschicht gemäß einem voreingestellten Zyklus.

5. Endgerät nach Anspruch 4, wobei das Endgerät (200) ferner Folgendes umfasst:
eine Empfangseinheit (230), ausgelegt zum Empfangen von durch eine Netzvorrichtung gesendeten Umschaltangabeinformationen;
wobei die Umschalteinheit (210) ferner ausgelegt ist zum Umschalten des ersten Bandbreitenteils auf den zweiten Bandbreitenteil in der Bitübertragungsschicht gemäß den Umschaltangabeinformationen.

6. Endgerät nach Anspruch 5, wobei die Empfangseinheit (230) speziell ausgelegt ist zum
Empfangen einer dedizierten Funkressourcensteuerungs- bzw. RRC-Signalisierung, einer Abwärtsstrecken-Steuerinformation DCI oder eines MAC-Steuerelements CE, das durch die Netzvorrichtung gesendet wird, wobei die dedizierte RRC-Signalisierung, die DCI oder das MAC-CE die Umschaltangabeinformationen ausmachen.

7. Computerlesbares Medium, das dafür ausgelegt ist, ein Computerprogramm zu speichern, wobei das Computerprogramm Anweisungen zum Ausführen des Verfahrens nach einem der Ansprüche 1-3 umfasst.

## Revendications

1. Procédé de commutation d'une partie de bande passante, le procédé comprenant les étapes suivantes :
commuter un paramètre d'une couche de contrôle d'accès au support, MAC, d'un premier paramètre à un deuxième paramètre lorsqu'une première partie de bande passante est commutée vers une deuxième partie de bande passante au niveau d'une couche physique, le premier paramètre correspondant à la première partie de bande passante et le deuxième paramètre correspondant à la deuxième partie de bande passante (S110) ; et
effectuer une opération correspondant à la couche MAC en fonction du deuxième paramètre (S120) ; où le deuxième paramètre comprend un paramètre de ressource de surveillance de canal de contrôle de liaison descendante physique, PDCCH ; où la commutation du paramètre de la couche MAC du premier paramètre au deuxième paramètre comprend les étapes suivantes :
recevoir, au niveau de la couche MAC, un identifiant de la deuxième partie de la bande passante en provenance de la couche physique après la commutation de la première partie de la bande passante à la deuxième partie de la bande passante au niveau de la couche physique ; et
commuter le paramètre de la couche MAC du premier paramètre au deuxième paramètre en fonction de l'identifiant de la deuxième partie de la bande passante ; où la première partie de la bande passante est commutée vers la deuxième partie de la bande passante au niveau de la couche physique, ce qui comprend :
la commutation de la première partie de la bande passante vers la deuxième partie de la bande passante au niveau de la couche physique selon un cycle prédéfini.

2. Procédé selon la revendication 1, dans lequel la première partie de la bande passante est commutée vers la deuxième partie de la bande passante au niveau de la couche physique, le procédé comprenant les étapes suivantes :
recevoir des informations d'indication de commutation envoyées par un dispositif de réseau ; et
commuter la première partie de la bande passante vers la deuxième partie de la bande passante au niveau de la couche physique en fonction des informations d'indication de commutation.

3. Procédé selon la revendication 2, dans lequel la réception des informations d'indication de commutation envoyées par le dispositif de réseau comprend l'étape suivante :
recevoir une signalisation dédiée de contrôle des ressources radio, RRC, des informations de contrôle de liaison descendante, DCI, ou un élément de contrôle MAC, CE, envoyés par le dispositif de réseau, où la signalisation dédiée RRC, les DCI ou le MAC CE comprennent les informations d'indication de commutation.

4. Dispositif terminal (200) comprenant :
une unité de commutation (210), configurée pour commuter un paramètre d'une couche de contrôle d'accès au support, MAC, d'un premier paramètre à un deuxième paramètre lorsqu'une première partie de bande passante est commutée vers une deuxième partie de bande passante au niveau d'une couche physique, le premier paramètre correspondant à la première partie de bande passante et le deuxième paramètre correspondant à la deuxième partie de bande passante ; et
une unité de traitement (220), configurée pour effectuer une opération correspondant à la couche MAC en fonction du deuxième paramètre ; où le deuxième paramètre comprend un paramètre de ressource de surveillance du canal de contrôle de liaison descendante physique, PDCCH ; où l'unité de commutation (210) est spécifiquement configurée pour :
recevoir, au niveau de la couche MAC, un identifiant de la deuxième partie de la bande passante provenant de la couche physique après que la première partie de la bande passante a été commutée vers la deuxième partie de la bande passante au niveau de la couche physique ; et
commuter le paramètre de la couche MAC du premier paramètre au deuxième paramètre en fonction de l'identifiant de la deuxième partie de la bande passante ; l'unité de commutation (210) étant en outre configurée pour :
commuter la première partie de la bande passante vers la deuxième partie de la bande passante au niveau de la couche physique selon un cycle prédéfini.

5. Dispositif terminal selon la revendication 4, dans lequel le dispositif terminal (200) comprend en outre :
une unité de réception (230), configurée pour recevoir des informations d'indication de commutation envoyées par un dispositif de réseau ;
l'unité de commutation (210) étant en outre configurée pour :
commuter la première partie de la bande passante vers la deuxième partie de la bande passante au niveau de la couche physique en fonction des informations d'indication de commutation.

6. Dispositif terminal selon la revendication 5, dans lequel l'unité de réception (230) est spécifiquement configurée pour :
recevoir une signalisation dédiée de contrôle des ressources radio, RRC, des informations de contrôle de liaison descendante, DCI, ou un élément de contrôle MAC, CE, envoyés par le dispositif de réseau, où la signalisation dédiée RRC, les DCI ou le MAC CE comprennent les informations d'indication de commutation.

7. Support lisible par ordinateur configuré pour stocker un programme informatique, où le programme informatique comprend des instructions pour l'exécution du procédé selon l'une quelconque des revendications 1 à 3.
